# EUROPEAN PATENT APPLICATION

(11) **EP 3 016 041 A1**
(43) Date of publication of application: **04.05.2016**
(21) Application number: 15000645.0
(22) Date of filing: 05.03.2015
(51) Int. Cl.: G06Q 10/02, G06Q 50/14

(54) **Schedule data standardization**

(30) Priority: 03.11.2014 US 201414531316
(71) Applicant: Amadeus S.A.S., 06410 Biot (FR)
(72) Inventor: Walker, Charles, 31240 L'Union (FR); Pasero, David, 06250 Mougins (FR); Vellay, Xavier, 06600 Antibes (FR); Giorla, Celine, 06700 Saint Laurent du Var (FR)
(74) Representative: Samson & Partner Patentanwälte mbB

(57) **Abstract**

Systems, methods, and computer program products for processing schedule data for conversion to standardized schedule data. Non-standardized schedule data is determined from a schedule database. A plurality of schedule data points associated with the non-standardized schedule data are determined. Geographical coordinates for each of the schedule data points are determined. A plurality of standardized schedule data points that are associated with the non-standardized schedule data are determined based at least in part on the geographical coordinates of each of the schedule data points. The non-standardized schedule data is converted to the standardized schedule data for storage in a standardized schedule database based at least in part on the plurality of standardized data points.

## Description

### TECHNICAL FIELD

The invention is generally related to computers and computer software, and in particular to systems, methods, and computer program products for processing schedule data.

### BACKGROUND

Computer technology is increasingly used in the travel industry to manage, support, book/reserve, and process travel reservations as well as data associated therewith. Generally, third party reservation agents, such as travel agents, and/or customers (e.g., travelers) often utilitze computer based devices/terminals to interface with a reservation system, such as a Global Distribution System (GDS), to book travel arrangements and/or travel related services for the customer. As will be appreciated, systems for managing inventory and/or processing such reservation requests are heavily utilized due to increasing global demand for electronic based travel reservation services. Therefore, efficiency of data processing/management and speed of data processing/management for these systems is increasingly critical for the technology area.

In general, air travel schedules (i.e., flight schedules) utilize International Air Transport Association (IATA) standardized travel stations codes to describe travel stations. Generally, the IATA standardized travel stations may be identified by a three letter code. For example, an airport located in Nice, France has the IATA code NCE. The use of IATA standardized travel station codes facilitates booking of travel services between travel stations. For example, a flight from Nice, France to Paris, France may be represented as NCE-PAR.

The standardized IATA codes are generally integrated into reservation systems, inventory systems, and/or global distribution systems that may be used to search for travel solutions, book travel services, and/or reserve travel services. Hence, while air travel schedules have been standardized and integrated into reservation systems, inventory systems, and/or global distribution systems, other forms of transportation and related travel schedules have not been globally standardized.

Because computer technology is utilized to increasingly manage and support travel reservations, a continuing need exists in the art for improved systems, methods, and computer program products for processing schedule data.

### SUMMARY

Embodiments of the invention generally comprise systems, methods, and computer program products for converting travel schedules of at least one non-air transport mode to standardized travel schedules with data processing. The travel schedules of the at least one non-air transport mode may be determined by querying a non-air travel schedules database. A plurality of travel stations associated with the travel schedules of the at least one non-air transport mode are determined. Geographical coordinates for each of the plurality of stations is determined. A plurality of standardized travel stations that are associated with the travel schedules of the at least one non-air transport mode are determined based at least in part on the geographical coordinates of each of the plurality of travel stations. The travel schedules of the at least one non-air transport mode are converted to the standardized travel schedules for storage in a standardized travel schedules database based at least in part on the plurality of standardized travel stations for air travel to thereby transform the travel schedules of the at least one non-air transport mode into standardized travel schedules based at least in part on the geographical coordinates for each of the plurality of travel stations and the plurality of standardized travel stations.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of a data processing system consistent with embodiments of the invention.
FIG. 2 is a flowchart illustrating a sequence of operations that may be performed by the system of FIG. 1 to convert travel schedules of at least one non-air transport mode to standardized travel schedules.
FIG. 3 provides an illustration of an example non-air transport mode travel schedule that may be processed by the system of FIG. 1.
FIG. 4 provides an illustration of the example non-air transport mode travel schedule of FIG. 3 with geographical coordinates added.
FIG. 5 is a flowchart illustrating a sequence of operations that may be performed by the data processing system of FIG. 1 to validate geographical coordinates of travel stations consistent with some embodiments of the invention.
FIG. 6 provides an illustration of an example non-air transport mode travel schedule that may be processed by the data processing system of FIG. 1.
FIG. 7 provides an illustration of an example non-air transport mode travel schedule that may be processed by the data processing system of FIG. 1.
FIG. 8 is a flowchart illustrating a sequence of operations that may be performed by the data processing system of FIG. 1 to determine standardized travel stations for a travel schedule of a non-air transport mode consistent with some embodiments of the invention.
FIG. 9 provides an illustration of an example travel station and candidate standardized travel stations.
FIG. 10 provides an illustration of an example non-air transport mode travel schedule and standardized travel stations that may be processed by the data processing system of FIG. 1.
FIG. 11 is a flowchart illustrating a sequence of operations that may be performed by the data processing system of FIG. 1 to determine a standardized travel schedule for a non-air transport mode travel schedule.
FIG. 12 provides an example illustration of the example non-air transport mode travel schedule and standardized travel stations of FIG. 10 for which some travel legs have been converted to global travel legs.

### DETAILED DESCRIPTION

Embodiments of the invention provide systems, methods, and computer program products for converting schedule data to standardized schedule data. Non-standardized schedule data may be determined from a schedule database. A plurality of schedule data points associated with the non-standardized schedule data may be determined. Geographical coordinates for each of the schedule data points may be determined. A plurality of standardized schedule data points that are associated with the non-standardized schedule data may be determined based at least in part on the geographical coordinates of each of the schedule data points. The non-standardized schedule data is converted to the standardized schedule data for stores in a standardized schedule database based at least in part on the plurality of standardized schedule data points such that the non-standardized schedule data is transformed to standardized schedule data based at least in part on the schedule data points and the standardized schedule data points. Consistent with some embodiments of the invention, the schedule data may comprise non-air transport mode travel schedules, the schedule data points may be travel stations, the standardized schedule data points may be standardized travel stations, and the standardized schedule data may be standardized travel schedules for implementation in travel service booking/reservation systems.

Embodiments of the invention provide systems, methods, and computer program products for converting travel schedules of non-air transport mode (also referred to as non-air transport mode travel schedules) to standardized travel schedules. In general, a non-air transport travel schedule for a travel service comprises, a departure travel station, a departure time, an arrival travel station, and an arrival time for one or more travel legs of the travel schedule. However, the departure travel station and arrival travel station for a non-air transport travel schedule are generally not standardized. Generally, non-air travel stations (e.g., rail stations, ferry ports, bus stations, etc.) greatly outnumber airports for which an IATA identifying code has been assigned (also referred to herein as standardized travel stations). For example, France has approximately 6,000 rail stations as compared to approximately 150 airports. The large number of such non-air travel stations leads to a large number of different travel services corresponding to the non-air transport mode travel schedules. In turn, incorporating these non-air transport mode travel schedules into a reservation system and/or a global distribution system that is configured to manage bookings and reservations for air travel schedules may require significant modification to such systems.

The travel services corresponding to non-air transport travel schedules may generally not be integrated into and/or supported by reservation systems and/or global distribution systems (GDS). Due to the lack of support for many of the non-air transport mode associated travel stations, booking and/or reserving non-air travel services represented by the non-air transport mode travel schedules are generally not included in travel solution determinations, travel service booking, and/or travel service reservation flows provided through reservation systems and global distribution systems. Embodiments of the invention convert non-air transport mode travel schedules to standardized travel schedules compatible with air travel standardization such that travel services corresponding to the non-air transport mode travel schedules may be incorporated into travel solution determinations, travel service booking, and/or travel service reservation flows provided through reservation systems and/or global distribution systems generally associated with air travel. In particular, embodiments of the invention may analyze travel stations associated with the non-air transport mode travel schedules and determine standardized travel stations that may be associated with the non-air transport mode travel schedules. Based on the determined standardized travel stations for air travel, embodiments of the invention may convert the non-air transport mode travel schedules to standardized travel schedules by determining one or more global travel legs associated with the standardized travel stations for each travel schedule.

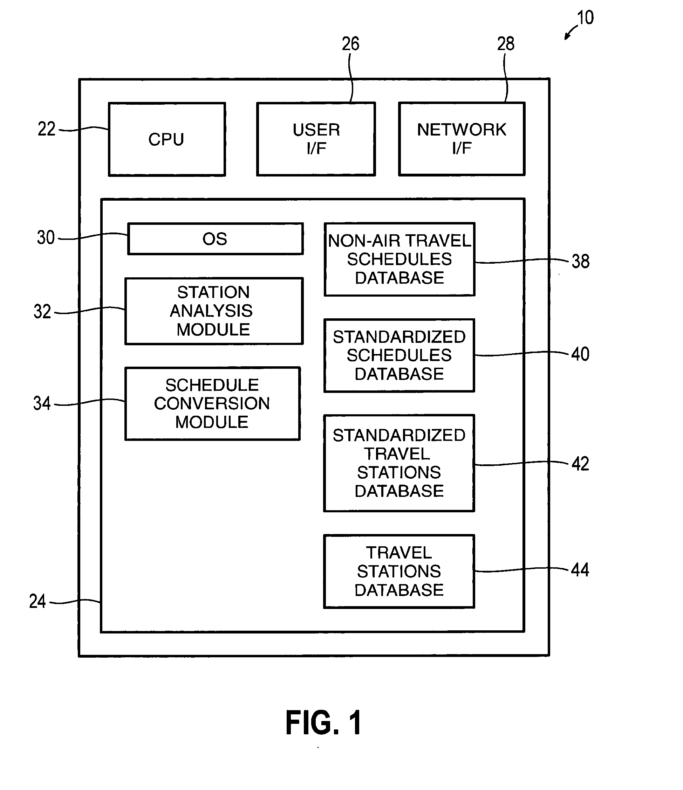

Turning now to the figures and particularly to FIG. 1, this figure provides a block diagram illustrating components of a data processing system 10 consistent with some embodiments of the invention. As shown, the data processing system 10 includes at least one processor 22 including at least one hardware-based microprocessor and a memory 24 coupled to the at least one processor 22. The memory 24 may represent the random access memory (RAM) devices comprising the main storage of the data processing system 10, as well as any supplemental levels of memory, e.g., cache memories, non-volatile or backup memories (e.g., programmable or flash memories), read-only memories, etc. In addition, memory 24 may be considered to include memory storage physically located elsewhere in the data processing system 10, e.g., any cache memory in a microprocessor, as well as any storage capacity used as a virtual memory, e.g., as stored on a mass storage device or on another computer coupled to the data processing system 10.

For interface with a user or operator, the data processing system 10 may include a user interface 26 incorporating one or more user input/output devices, e.g., a keyboard, a pointing device, a display, a printer, etc. Otherwise, data may be communicated to and from another computer or terminal over a network interface 28 coupled to a communication network (e.g., the Internet, a local area network, a wide area network, a cellular voice/data network, one or more high speed bus connections, and/or other such types of communication networks). The data processing system 10 also may be in communication with one or more mass storage devices, which may be, for example, internal hard disk storage devices, external hard disk storage devices, external databases, storage area network devices, etc.

The data processing system 10 typically operates under the control of an operating system 30 and executes or otherwise relies upon various computer software applications, components, programs, objects, modules, engines, data structures, etc., including for example, a station analysis module 32 and a schedule conversion module 34. In general, the schedule analysis module 32 may be configured to receive and parse non-air transport mode travel schedules to determine travel stations associated with the non-air transport mode travel schedules and determine geographical coordinates for each of the travel stations. The schedule conversion module 34 may be configured to analyze the geographical coordinates for the travel stations, determine standardized travel stations for air travel associated with the non-air transport travel schedules based at least in part on the geographical coordinates, and convert the non-air transport mode travel schedules to standardized travel schedules based at least in part on the standardized travel stations for air travel.

Moreover, various applications, components, programs, objects, modules, engines etc. may also execute on one or more processors in another computer coupled to the data processing system via a communication network, e.g., in a distributed or client-server computing environment, whereby the processing required to implement the functions of a computer program may be allocated to multiple computers over a network. For example, some of the functionality described herein as being incorporated into the data processing system 10 and/or modules 32, 34 of the data processing system 10 may be implemented in one or more servers. Consistent with embodiments of the invention, the modules 32, 34 and/or other such modules/applications may be executing on one or more servers of the data processing system 10, and the modules 32, 34 may cause the processor 22 of the data processing system 10 to perform operations consistent with embodiments of the invention.

The memory 24 of the data processing system 10 may generally store one or more databases including, for example, a non-air transport mode travel schedule database 38, a standardized travel schedule database 40, a standardized travel stations database 42, and/or and a travel stations database 44. The databases 38-44 may comprise data and supporting data structures that store and organize the data. In particular, the databases 38-44 may be arranged with any database organization and/or structure including, but not limited to, a relational database, a hierarchical database, a network database, and/or combinations thereof. A database management system in the form of a computer software application executing as instructions on a processing unit of the data processing system 10 may be used to access the information or data stored in records of the databases 38-46 in response to a query, where a query may be dynamically determined and executed by the operating system 30, other applications, and/or one or more modules 32-34. Moreover, the databases 38-44 may be maintained and/or provided through a connected communication network by one or more third party information providers.

The non-air transport mode travel schedule database 38 may store non-air transport mode travel schedules, including schedule information such as a departure travel station, an arrival travel station, a departure time, and an arrival time for one or more travel legs of each travel schedule. Consistent with embodiments of the invention, the station analysis module 36 may cause the data processing system 10 upon execution to retrieve the stored schedule information and parse the non-air transport mode travel schedules stored therein to determine the departure travel station, the arrival travel station, the departure time, and the arrival time for each travel leg of a non-air transport mode travel schedule stored therein. The travel stations database 44 may store information for non-air transport mode associated travel stations (e.g., rail stations, ferry ports, bus stations, etc.), including, for example, geographical coordinates and/or other such location information for such non-air transport mode associated travel stations. Therefore, consistent with some embodiments of the invention, the data processing system 10, executing the station analysis module 32, may query the travel stations database 44 to determine geographical coordinates and/or other such location information for the travel stations of the non-air transport mode travel schedules that are to be converted to standardized travel schedules. As will be appreciated, the data processing system 10 may generate a query for the travel stations database 44 based at least in part on travel stations determined from the non-air transport mode travel schedules. The geographical coordinates and/or other such location information received for each travel station in response to the query may be stored in the non-air travel schedules database with the corresponding non-air transport travel schedule stored therein. In some embodiments, such location information may include travel schedule density and/or travel schedule frequency for each travel station. Travel schedule density and/or travel schedule frequency generally refers to a frequency of any other travel schedules that may use/pass through the particular travel station.

The standardized schedules database 40 may store schedules that have been standardized according to embodiments of the invention. The standardized travel stations database 42 may store information for travel stations that have been standardized for implementation into reservation system and/or global distribution systems. For example, the standardized travel stations database 42 may store a standardized identifier (e.g., an IATA code, a geographically recognized identifier, etc.), geographical coordinates and/or other such location information, and/or other such information. In some embodiments, the standardized travel stations database 42 may store travel schedule density and/or travel schedule frequency information for one or more standardized travel stations. For example, if a standardized travel station is an airport, the standardized travel stations database may store information indicating a number of flights arriving and departing the airport (e.g., density), the average number of flights arriving and/or departing per day (e.g., frequency), an average number of passengers using the airport, a number of types of transport modes using the airport (e.g., rail travel, air travel, etc.), a number of types of travel service providers associated with the airport, a number of platforms, a number of gates, a number of rail travel tracks and/or other such types of relevant information. In some embodiments of the invention, the standardized travel stations database 42 may store information for each travel station having an IATA code (which in some embodiments of the invention corresponds to a standardized travel station). Consistent with embodiments of the invention, the data processing system 10, during execution of the schedule conversion module 34, may query the standardized travel stations database 42 to retrieve information for one or more standardized travel stations.

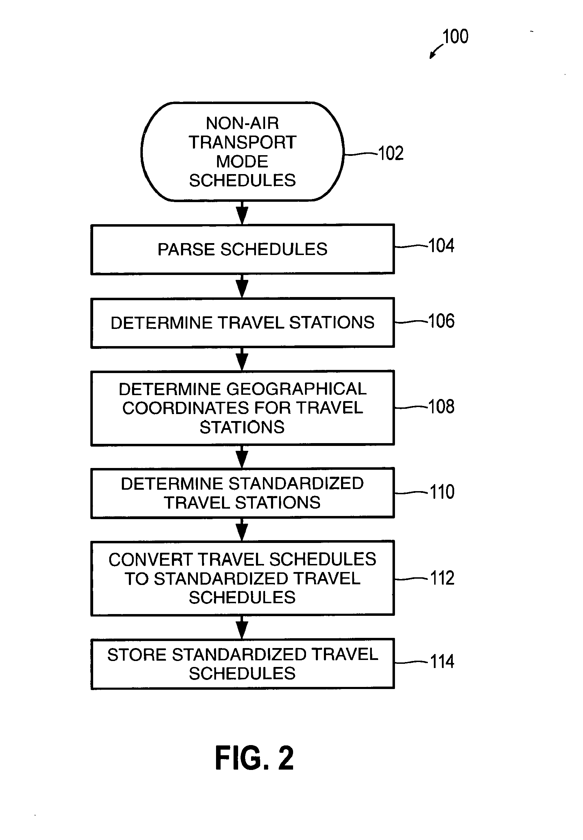

FIG. 2 provides a flowchart 100 that illustrates a sequence of operations that may be performed by the data processing system 10 to convert travel schedules of at least one non-air transport mode (block 102) to standardized travel schedules. The non-air transport mode travel schedules may be determined by querying the non-air travel schedules database. The data processing system 10 may parse (block 104) the non-air transport mode travel schedules to determine departure travel stations, arrival travel stations, departure times, and arrival times for each travel leg of a travel schedule (block 106). The data processing system 10 determines geographical coordinates for each travel station associated with the non-air transport mode travel schedules (block 108). Generally, the data processing system 10 may query a travel stations database 44 maintained at the data processing system 10 and/or provided by a third party information service to determine geographical coordinates for each travel station. Furthermore, in some embodiments the data processing system 10 may query the travel stations database 44 based at least in part on a name of each travel station indicated in one or more of the travel schedules. Moreover, the data processing system 10 generates a query for the travel stations database based at least in part on the travel stations determined for the non-air transport mode travel schedules.

Based on the determined geographical coordinates for the travel stations, the data processing system determines standardized travel stations associated with the non-air transport mode travel schedules (block 110). Consistent with some embodiments of the invention, the data processing system 10 may query the standardized travel stations database 42 to determine standardized travel stations proximate the travel stations based at least in part on the geographical coordinates. Moreover, the data processing system 10 may generate a query for the standardized travel stations database 42 based at least in part on the geographical coordinates determined for the travel stations. For example, the data processing system may determine each standardized travel station within a predefined geographical distance of a travel station. Based on the standardized travel stations, the travel schedules are converted to standardized travel schedules (block 112), where the standardized travel schedules include departure standardized travel stations, arrival standardized travel stations, departure times, and arrival times for one or more global travel legs of each standardized travel schedule. Consistent with some embodiments of the invention, the data processing system 10 may store the standardized travel schedules in a standardized travel schedule database 40, where such standardized travel schedules may be used to by reservation systems and/or global distribution systems to offer travel solution determination, travel service booking, and/or travel service reservations for non-air transport mode travel services.

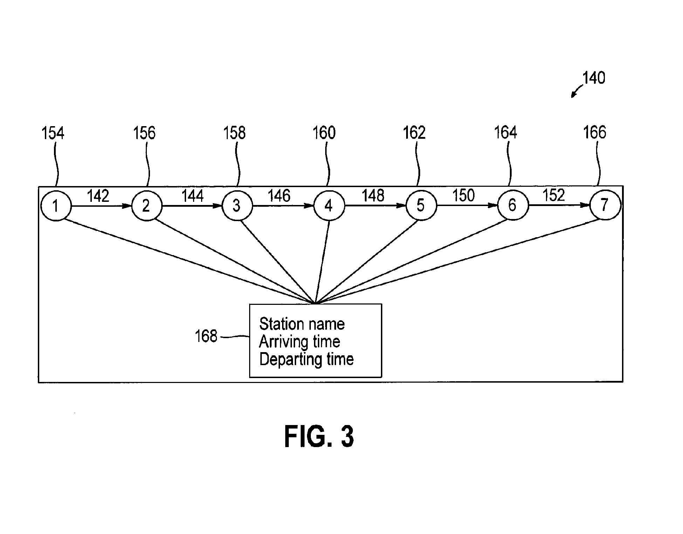

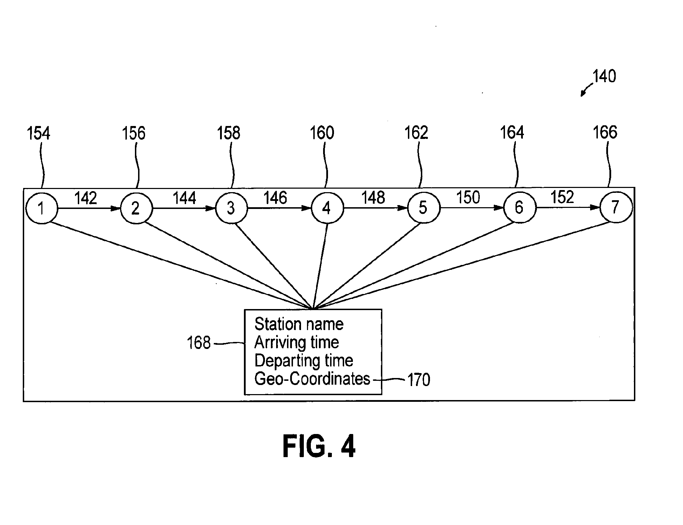

Turning now to FIG. 3, this figure provides a diagrammatic illustration of an example non-air transport mode travel schedule 140. In this example, the travel schedule for the non-air transport mode includes travel legs 142-152 between a plurality of travel stations 154-166 (also labeled '1' to '7'), where the travel schedule 140 includes a station name, arriving time, and departing time for each travel leg 142-154. FIG. 4 provides a diagrammatic illustration of the example non-air transport mode travel schedule 140 that illustrates the addition of geographical information 170 (e.g., geographical coordinates) to the non-air transport mode travel schedule 140 based on the determination of geographical coordinates consistent with some embodiments of the invention.

In some embodiments of the invention, the data processing system 10 may analyze candidate geographical coordinates for travel stations retrieved from a travel stations database 42 or determined based on location information analysis to determine whether the geographical coordinates are valid for schedule conversion processes consistent with embodiments of the invention.

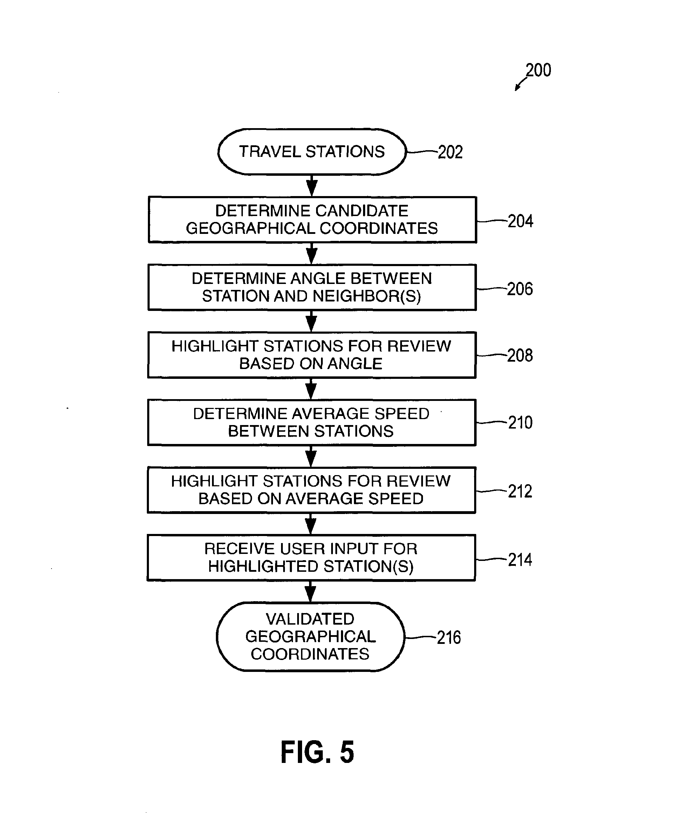

FIG. 5 provides a flowchart 200 that illustrates a sequence of operations that may be performed by the data processing system 10 to determine validated geographical coordinates for travel stations of a non-air transport mode travel schedule (block 202) consistent with some embodiments of the invention. The data processing system 10 may determine candidate geographical coordinates for each travel station of the non-air transport mode travel schedule (block 204). As discussed, the data processing system 10 may determine the candidate geographical coordinates for a travel station based at least in part on a name of the travel station indicated in the non-air transport mode travel schedule. In some embodiments of the invention, the data processing system 10 may query a travel station database 44 indicating a name of one or more travel stations, and a response may include candidate geographical coordinates for each of the one or more travel stations.

However, since information for a large number of non-air transport mode travel stations may be stored at the travel station database 44, and a name of a travel station may not uniquely identify the travel station (e.g., some travel stations may have common names or similar names), the data processing system 10 may analyze the candidate geographical coordinates returned for each travel station based at least in part on the candidate geographical coordinates returned for other travel stations of the non-air transport mode travel schedule. Consistent with some embodiments of the invention, the data processing system 10 may determine an angle between the candidate geographical coordinates of each travel station and two neighboring travel stations (block 206). To determine an angle for a particular travel station, the data processing system 10 may: determine a middle point between a neighboring previous travel station and a neighboring subsequent travel station; determine a circle centered at the middle point which passes through the previous travel station and the subsequent travel station, the radius of such circle may be considered the half the distance between the previous travel station and the subsequent travel station; determine a distance 'x' between the particular travel station and the middle point; determine whether the distance 'x' is smaller than the radius; if the distance 'x' is smaller than the radius, then the angle for the particular travel station is greater than 90°, and if the distance 'x' is larger than the radius, then the angle for the particular travel station is less than 90°. The data processing system 10 highlights any travel stations having candidate geographical coordinates that return an angle that indicates that the candidate geographical coordinates may be incorrect for the travel station (block 208). In general, a predefined value may be specified in one or more settings/rules that identify angle values for which the data processing system 10 may highlight a corresponding travel station for review. For example, the data processing system may highlight for review any travel station having candidate geographical coordinates that result in a determination of an angle less than 90°.

Furthermore, the data processing system 10 may analyze the candidate geographical coordinates returned for each travel station based at least in part on the candidate geographical coordinates of at least one neighboring travel station, a departure time for a corresponding travel leg, and an arrival time for the corresponding travel leg. In some embodiments of the invention, the data processing system 10 may determine an average speed for a travel leg of the travel schedule between a first travel station and a second, neighboring travel station (block 210). The data processing system 10 may determine the average speed between the first travel station and the second travel station based at least in part on the candidate geographical coordinates of the first travel station, the candidate geographical coordinates of the second travel station, a departure time of a travel leg between the first travel station and the second travel station, and an arrival time of the travel leg. The data processing system 10 may highlight for review any travel stations having an average speed for a travel leg therebetween that may indicate that candidate geographical coordinates for one of the stations may be incorrect (block 212). In general, a predefined average speed value may be specified in one or more settings/rules that identify average speed values for which the data processing system 10 may highlight corresponding travel stations for review. For example, if the travel schedule is for rail travel, and the average speed of a train should not exceed 300 km/h, the data processing system 10 may highlight any two travel stations having an average speed of over 300 km/h for review. In general, the settings/rules may correspond to specific types of non-air transport modes (e.g., rail travel, motor vehicle travel, ferry travel, etc.).

In general, embodiments of the invention may generate one or more graphical user interfaces through which to communicate data and/or receive user input via one or more user input devices. Therefore, consistent with embodiments of the invention, the data processing system may generate a graphical user interface that displays any highlighted travel stations and the candidate geographical coordinates for a travel schedule for review by an operator/user. The user may input corrected geographical coordinates for one or more highlighted travel stations and/or indicate that the candidate geographical coordinates are correct for one or more highlighted travel stations (block 214). Based on the user input for the candidate geographical coordinates for the highlighted travel stations and the candidate geographical coordinates for non-highlighted travel stations, the data processing system 10 thereby determines validated geographical coordinates for each travel station of a travel schedule (block 216).

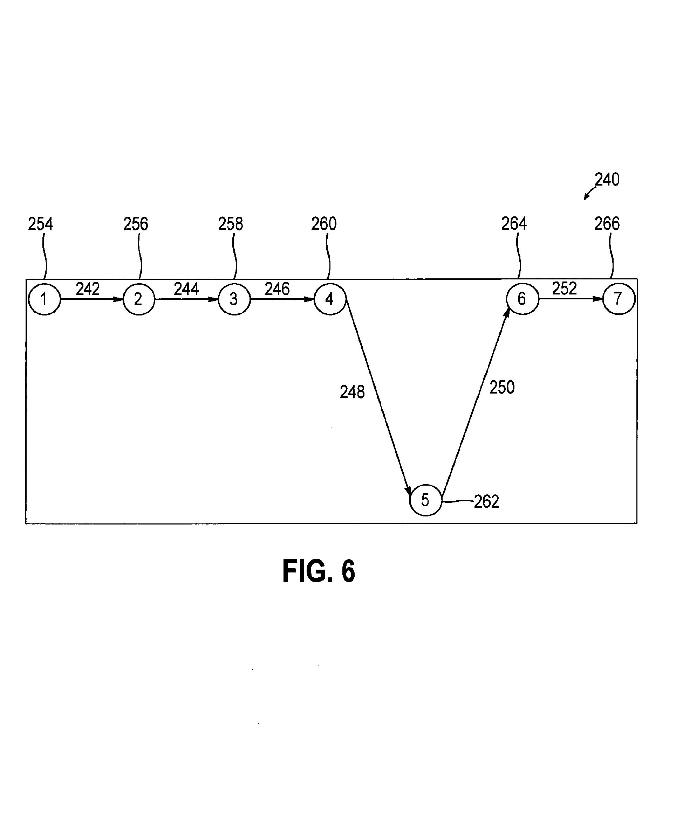

Turning now to FIG. 6, this figure provides a diagrammatic illustration of an example non-air transport mode travel schedule 240. In this example, the travel schedule 240 for the non-air transport mode includes travel legs 242-252 between a plurality of travel stations 254-266 (also labeled '1' to '7'). The geographical coordinates for a particular travel station 262 (also labeled '5') appear to be incorrect based on distance from a previous neighboring station 260 (labeled '4') and distance to a subsequent neighboring travel station 264 (labeled '6'). In this example, the data processing system 10 may perform an average speed analysis for the travel leg 248 between the previous station 260 and the particular station 262, and the data processing system 10 may perform an average speed analysis for the travel leg 250 between the particular station 262 and the subsequent station 264. The data processing system 10 may highlight the particular station 262 for review if the average speeds for either or both legs 248, 250 exceed a predefined value for the type of non-air transport mode.

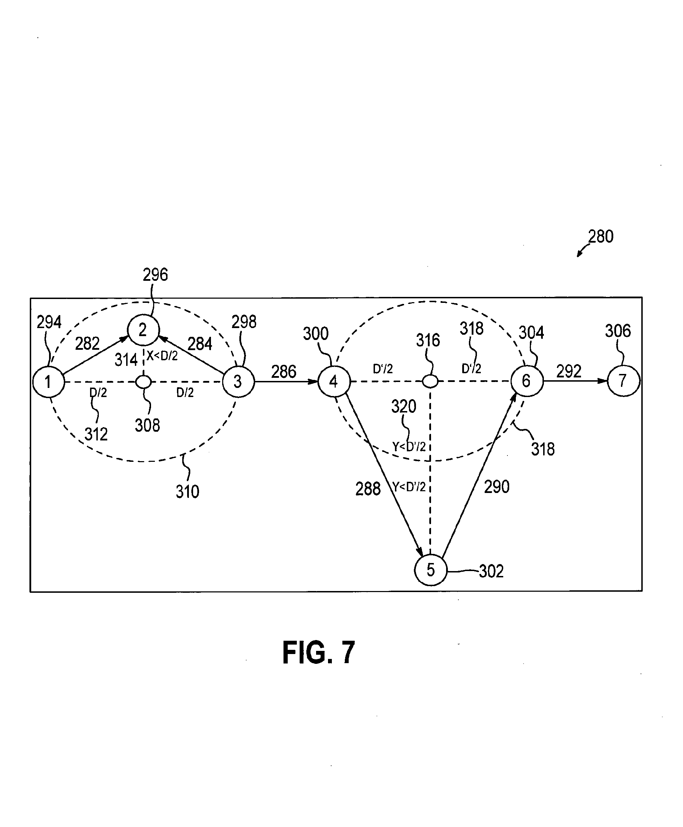

FIG. 7 provides a diagrammatic illustration of an example non-air transport mode travel schedule 280. In this example, the travel schedule for the non-air transport mode 280 includes travel legs 282-292 between a plurality of travel stations 294-306 (also labeled '1' to '7', where the travel stations may be further referred to as the "first travel station" to the "seventh travel station"). The example illustrates an evaluation of candidate geographical coordinates for the second travel station 296 (labeled '2') and the fifth travel station 302 (labeled '5') based on an angle between the stations 296, 302 and respective neighboring stations. In this example, a mid-point 308 is provided between the first travel station 294 (labeled '1') and the third travel station 298 (labeled '3'). A circle 310 centered at the mid-point and having a radius 312 (labeled 'D/2') that is half the distance between the first travel station 294 and the third travel station 298 is shown. In this example, the candidate geographical coordinates for the second travel station 296 may not be highlighted for review because a distance 314 (labeled 'X<D/2') between the second station 296 and the mid-point 308 is less than the radius 312, thus indicating that an angle associated with the second travel station 296 is greater than 90°.

In contrast, the candidate geographical coordinates of the fifth travel station 302 may be highlighted for review based on an angle analysis. For illustration purposes, a mid-point 316 is provided between the fourth travel station 300 (labeled '4') and the sixth travel station 304 (labeled '6'). A circle 318 centered at the mid-point 316 and having a radius 318 (labeled 'D'/2') that is half the distance between the fourth travel station 300 and the sixth travel station 304 is shown. As shown, a distance 320 (labeled 'Y>D'/2)' between the fifth travel station 302 and the corresponding mid-point 316 is greater than the radius 318, which indicates that the angle associated with the fifth travel station is less than 90°.

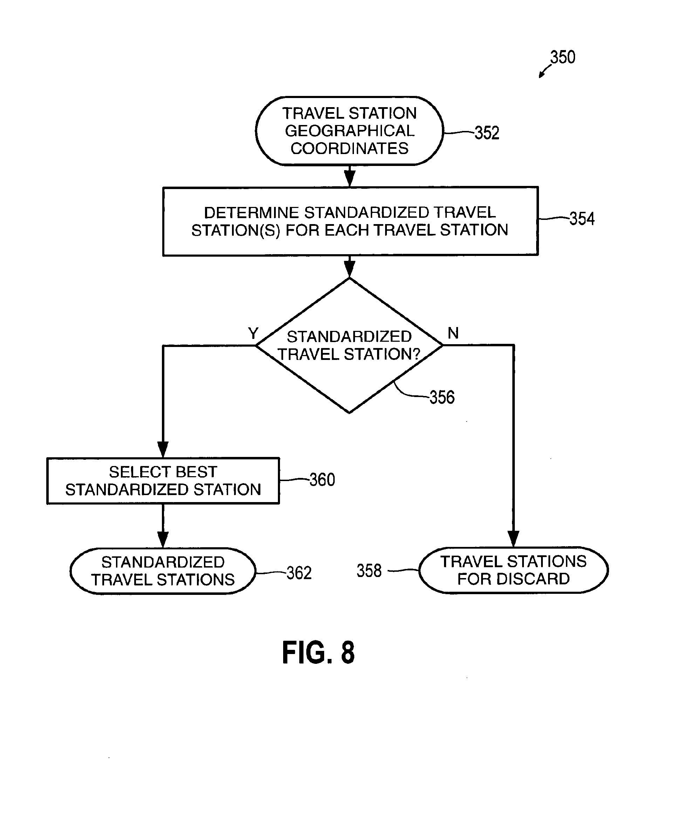

FIG. 8 provides a flowchart a flowchart 350 that illustrates a sequence of operations that may be performed by the data processing system 10 to determine standardized travel stations consistent with some embodiments of the invention. The data processing system 10 may analyze the geographical coordinates of each travel station (block 352) to determine any standardized travel stations for the travel station (block 354) based on distance between the geographical coordinates and standardized travel stations. Generally, a predefined distance may be provided in one or more rules/settings such that the data processing system 10 searches for standardized travel stations within the predefined distance of the geographical coordinates for each travel station. For example, the data processing system 10 may search within a 10 kilometer distance of a travel station for standardized travel stations.

For some travel stations, one or more standardized travel stations may be determined. However, for some travel stations, a matching standardized travel station may not be determined - i.e., a standardized travel station does not exist within the predefined distance of the geographical coordinates of the travel station. Therefore, for each travel station, the data processing system 10 determines whether a standardized travel station was determined (block 356). If a standardized travel station was not matched for a travel station ("N" branch of block 356), the data processing system 10 may determine that the travel station will be discarded during conversion of the non-air transport mode travel schedules (block 358). If a standardized travel station was matched (i.e., determined) for a particular travel station ("Y" branch of block 356), the data processing system 10 selects a best standardized travel station for the particular travel station (block 360). For some travel stations, only one standardized travel station may be matched to the respective travel station. In such cases, the matched standardized travel station is selected as the best standardized travel station for the travel station.

However, for some travel stations, more than one standardized travel station may be matched - i.e., more than one standardized travel station may meet the distance criteria for determining standardized travel stations. Hence, for some travel stations, a plurality of candidate standardized travel stations may be matched. Embodiments of the invention may select a best standardized travel station from among the plurality of candidate standardized travel stations based on one or more criteria. In some embodiments of the invention, the data processing system 10 may select the best standardized travel station from among the plurality of candidate standardized travel stations based at least in part on distance from the travel station to each candidate standardized travel station. In some embodiments of the invention, the data processing system 10 may select the best standardized travel station based at least in part on a schedule density, where schedule density corresponds to a frequency of any other travel schedules passing through a candidate standardized travel station. For example, a busy airport may be selected over a comparatively less busy airport. Therefore, the data processing system 10 determines standardized travel stations for the non-air transport mode travel schedules (block 362). In some embodiments of the invention the data processing system 10 may select the best standardized travel station from among the plurality of candidate standardized travel stations based at least in part on distance, travel schedule density/frequency, an number of passengers per day, a number of travel service providers, and/or any other such similar types of information that may be associated with the candidate standardized travel stations.

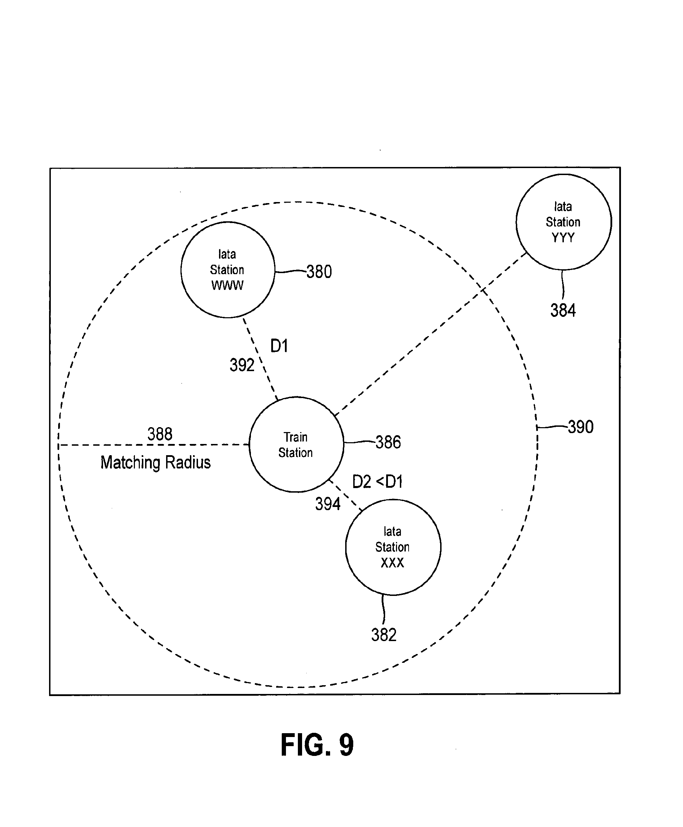

FIG. 9 provides a diagrammatic illustration of an example determination of standardized travel stations 380-384 (labeled 'IATA station WWW', 'IATA station XXX', and IATA station 'YYY', and referred to as "station WWW", "station XXX", and "station YYY") for a travel station 386 (labeled 'Train station') associated with a non-air transport mode travel schedule. For illustration purposes, a matching radius 388 (i.e., a predefined distance) is provided which corresponds to a provided circular matching area 390. As shown, station WWW 380 and station XXX 382 are within the predefined distance of the travel station 386 illustrated by the matching radius 388 and matching area 390. In contrast, station YYY 384 is not within the predefined distance of the matching radius 388. Therefore, in this example, the data processing system 10 may determine station WWW 380 and station XXX 382 to be candidate standardized travel stations, while station YYY 384 may not be determined to be a candidate standardized travel station. Moreover, as shown, a distance 392 (labeled 'D1') from station WWW 380 to the travel station 386 is greater than a distance 394 (labeled 'D2') from station XXX 382 to the travel station 386. In some embodiments of the invention, station XXX 382 may be determined to be the best standardized travel station based on the distance 394 to the travel station. However, as discussed, in other embodiments, if station WWW 380 had a high frequency of travel schedules passing therethrough, some embodiments of the invention may select station WWW 380 as the best standardized travel station. Generally, selecting the best standardized travel station from among a plurality of candidate standardized travel stations may be based at least in part on one or more rules and/or settings defined by a user.

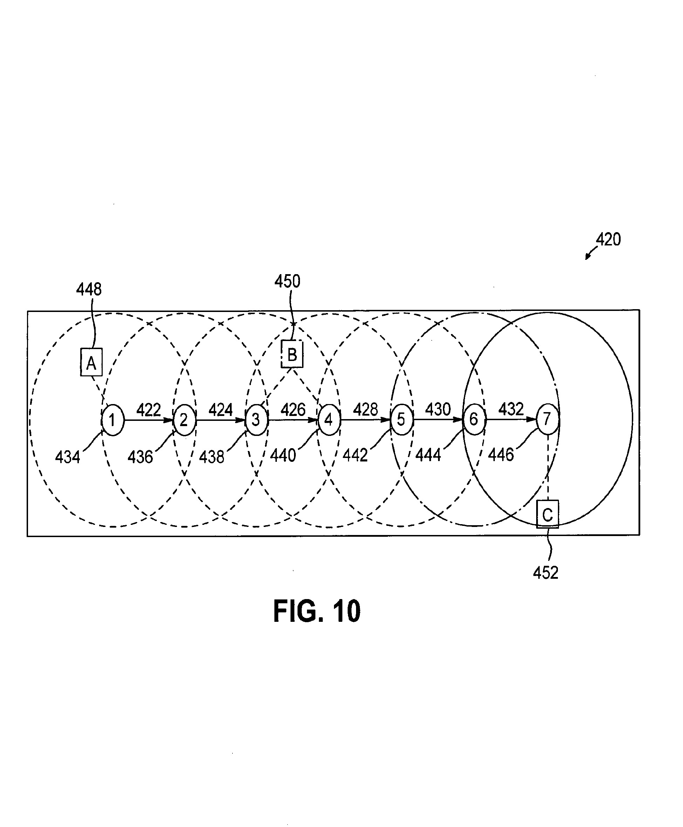

FIG. 10 provides a diagrammatic illustration of an example non-air transport mode travel schedule 420. In this example, the travel schedule 420 for the non-air transport mode includes travel legs 422-432 between a plurality of travel stations 434-446 (also labeled '1' to '7', where the travel stations may be further referred to as the "first travel station" to the "seventh travel station"). In addition, the example includes three standardized travel stations 448-452 (also labeled 'A', 'B', 'C', where the standardized travel stations may be referred to as "station A", "station B", and station "C"). For illustration purposes, circular matching areas centered at each travel station 434-446 are provided that may be based on a predefined matching distance defined by one or more rules/settings. As shown, station A 448 is within the predefined distance of the first travel station 434 and may therefore be determined to be a standardized travel station for the first travel station 434. Station B 450 is within the predefined distance of the third travel station 438 and the fourth travel station 440 and may be determined to be a standardized travel station for the third travel station 438 and the fourth travel station 440. Station C 452 is within the predefined distance of the seventh travel station 446 and may be determined to be a standardized travel station for the seventh travel station 446.

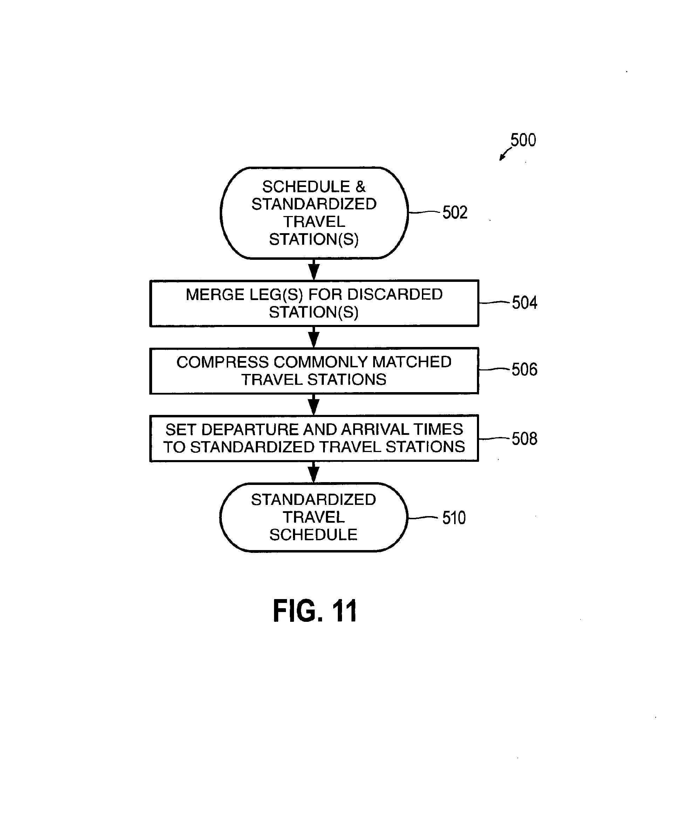

Turning now to FIG. 11, this figure provides a flowchart 500 that illustrates a sequence of operations that may be performed by the data processing system 10 to convert a non-air transport mode travel schedule to a standardized travel schedule consistent with some embodiments of the invention. As shown, the data processing system 10 may analyze the non-air transport mode travel schedule and the standardized travel stations determined for some of the travel stations of the non-air transport mode travel schedule (block 502). The data processing system 10 may merge travel legs associated with stations for which a standardized travel station was not matched (i.e., discarded travel stations) to determine one or more global travel legs corresponding thereto (block 504). In general, travel legs between travel stations matched with standardized travel stations may be merged such that a departure travel station corresponds to a standardized travel station and an arrival travel station corresponds to a standardized travel station, where such merged travel legs may be referred to as a global travel leg. The data processing system 10 may compress travel stations that have been matched to a common standardized travel station (block 506) to thereby determine one or more global travel legs. Based on the discarded travel stations and the compressed travel stations, the data processing system may set departure times and arrival times for global travel legs using standardized travel stations (block 508) to thereby determine a standardized travel schedule (block 510).

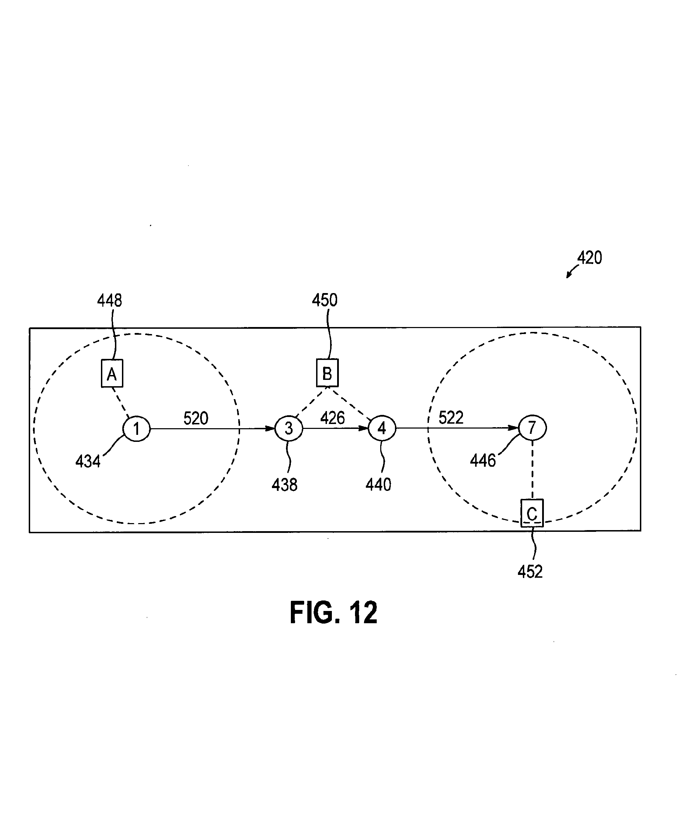

FIG. 12 provides a diagrammatic illustration of the example travel schedule 420 of FIG. 10, where travel stations that were not matched to standardized travel stations were removed and the associated travel legs merged. In particular, referring to FIG. 10, the second travel station 436, fifth travel station 442, and sixth travel station 444 have been discarded. The travel leg 422 between the first travel station 434 and the second travel station 436 (referred to as the "1-2 travel leg") has been merged with the travel leg 424 between the second travel station 436 and the third travel station 438 (referred to as the "2-3 travel leg") - i.e., the resulting global travel leg (520 in FIG. 12, and referred to as the "1-3 travel leg") departs the first travel station 434 at the departure time for the 1-2 travel leg and arrives at the third travel station 438 at the arrival time for the 2-3 travel leg. In addition, the travel leg 428 between the fourth travel station 440 and the fifth travel station 442 (referred to as the "4-5 travel leg"), the travel leg 430 between the fifth travel station 442 and the sixth travel station 444 (referred to as the "5-6 travel leg"), and the travel leg 432 between the sixth travel station 444 and the seventh travel station 446 (referred to as the "6-7 travel leg") have been merged - i.e., the resulting global travel leg (522 in FIG. 12, and referred to as the "4-7 travel leg") departs the fourth travel station 440 at the departure time for the 4-5 travel leg and arrives at the seventh travel station 446 at the arrival time for the 6-7 travel leg.

Furthermore, the third travel station 438 and the fourth travel station 440 are commonly associated with station B 450. Consistent with some embodiments of the invention, the travel leg 426 (referred to as the "3-4 travel leg") between the third travel station 438 and the fourth travel station 440 may be compressed, such that, for purposes of a standardized travel schedule the departure and arrival times associated with station B 450 correspond to the departure and arrival times of the third travel station 438. In other embodiments, the 3-4 travel leg 426 may be compressed, such that, for purposes of a standardized travel schedule the arrival times associated with station B 450 correspond to the arrival times associated with the third travel station 438 and the departure times associated with station B 450 correspond to the departure times of the fourth travel station 440. In other embodiments, the 3-4 travel leg 426 may be compressed, such that, for purposes of a standardized travel schedule the arrival times associated with station B 450 correspond to the arrival times associated with the fourth travel station 440 and the departure times associated with station B 450 correspond to the departure times of the third travel station 438. Therefore, in this example, a global travel leg for the standardized travel schedule between station B 450 and station C 452 may correspond to the 3-4 travel leg 426 and the 4-7 travel leg 522.

As illustrated in the examples and described herein, embodiments of the invention may convert non-air transport mode travel schedules to standardized travel schedules. In general, the non-air transport mode travel schedules include one or more travel legs between travel stations. Consistent with embodiments of the invention, conversion of the non-air transport mode travel schedules may comprise determining standardized travel stations associated with the travel schedules based on the travel stations of the travel schedules. Furthermore, conversion of the non-air transport mode travel schedules to standardized travel schedules may comprise determining one or more global travel legs corresponding to the standardized travel stations based at least in part on the travel stations and the travel legs of the non-air transport mode travel schedules.

Furthermore, as described herein, embodiments of the invention may improve travel schedule generation and/or travel service reservation technology areas by standardizing non-air transport mode travel schedules, such that the standardized schedules may be utilized in travel reservation systems (e.g., global distribution systems) to facilitate the reservation/booking of non-air transport mode travel services. As will be appreciated, implementation/integration of non-air transport mode travel services into travel reservation systems configured to facilitate the reservation/booking of air travel services presents many problems in the travel service reservation technology areas. Standardized travel schedules generated consistent with embodiments of the invention may be implemented and/or incorporated into travel reservation systems configured to facilitate air travel service reservation and booking, thereby increasing support for non-air transport mode travel service recommendations and/or reservations. Moreover, standardized travel schedules generated consistent with embodiments of the invention may facilitate improved processing speed and efficiency for data processing systems configured to facilitate travel service reservations. Moreover, embodiments of the invention transform travel schedules of at least one non-air transport mode into standardized travel schedules based on the travel stations of the travel schedules, geographical coordinates of the travel stations, and/or standardized travel stations proximate the travel stations of the travel schedules. The transformation of such non-air transport mode travel schedules may generally comprise compressing one or more travel legs, discarding one or more travel legs, and/or merging one or more travel legs to determine one or more global travel legs that may be incorporated into a standardized travel schedule.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for converting travel schedules of at least one non-air transport mode to standardized travel schedules, the method comprising:
in a data processing system, querying a non-air travel schedules database to determine the travel schedules of the at least one non-air transport mode;
determining, from the travel schedules of the at least one non-air transport mode, a plurality of travel stations associated with the travel schedules of the at least one non-air transport mode;
determining, with at least one processor, geographical coordinates for each of the plurality of travel stations;
determining, with the at least one processor, a plurality of standardized travel stations that are associated with the travel schedules of the at least one non-air transport mode based at least in part on the geographical coordinates of each of the plurality of travel stations; and
converting, with the at least one processor, the travel schedules of the at least one non-air transport mode to the standardized travel schedules for storage in a standardized travel schedules database based at least in part on the plurality of standardized travel stations to thereby transform the travel schedules of the at least one non-air transport mode into standardized travel schedules based at least in part on the geographical coordinates for each of the plurality of travel stations and the plurality of standardized travel stations.

2. The method of claim 1, wherein the at least one non-air transport mode comprises rail travel, motor vehicle based travel, ferry travel, or any combination thereof.

3. The method of claim 1 or claim 2, wherein the geographical coordinates for each of the plurality of travel stations are validated geographical coordinates, and determining the validated geographical coordinates for each of the plurality of travel stations comprises:
determining candidate geographical coordinates for each of the plurality of travel stations;
determining an angle associated with a particular travel station based on the candidate geographical coordinates of the particular travel station and the candidate geographical coordinates of two neighboring travel stations; and
determining whether the candidate geographical coordinates for the particular travel station are validated geographical coordinates based at least in part on the determined angle.

4. The method of claim 3, further comprising:
in response to determining that the candidate geographical coordinates for the particular travel station are not validated geographical coordinates, highlighting the particular travel station for review.

5. The method of claim 1 or claim 2, wherein the geographical coordinates for each of the plurality of travel stations are validated geographical coordinates, and determining the validated geographical coordinates for each of the plurality of travel stations comprises:
determining candidate geographical coordinates for each of the plurality of travel stations;
determining an average speed associated with a travel leg between a particular travel station and at least one neighboring travel station based at least in part on the candidate geographical coordinates of the particular travel station and the candidate geographical coordinates of the at least one neighboring travel station; and
determining whether the candidate geographical coordinates for the particular travel station are validated geographical coordinates based at least in part on the determined average speed.

6. The method of any of claims 1 to 5, wherein determining the plurality of standardized travel stations associated with the travel schedules comprises:
determining candidate standardized travel stations within a predefined distance of the geographical coordinates of the travel stations; and
determining the plurality of standardized travel stations from the candidate standardized travel stations based at least in part on a distance from each candidate standardized travel station to a nearest travel station of the plurality of travel stations.

7. The method of any of claims 1 to 6, wherein each travel schedule includes at least one travel leg, and converting the travel schedules of the at least one non-air transport mode to the standardized travel schedules comprises:
determining at least one global travel leg based at least in part on the at least one travel leg and standardized travel stations determined for each travel schedule.

8. The method of claim 7, wherein a particular travel schedule comprises two travel legs, and determining the at least one global travel leg for the particular travel schedule comprises:
merging the two travel legs such that the at least one global travel leg includes a departure time and departure travel station for an earlier of the two travel legs and an arrival time and arrival travel station of a later of the two travel legs.

9. The method of any of claims 1 to 6, wherein a particular travel schedule comprises two travel legs, and determining the at least one global travel leg for the particular travel schedule comprises:
merging the two travel legs such that the at least one global travel leg includes a departure time and departure travel station for a later of the two travel legs and an arrival time and arrival travel station of an earlier of the two travel legs.

10. The method of any of claims 1 to 9, wherein determining the plurality of standardized travel stations that are associated with the travel schedules of the at least one non-air transport mode is based at least in part on a distance between a particular travel station and a particular standardized travel station.

11. The method of any of claims 1 to 10, wherein determining the plurality of standardized travel stations that are associated with the travel schedules of the at least one non-air transport mode is based at least in part on a frequency of any other travel schedules at a particular standardized travel station.

12. The method of any of claims 1 to 11, wherein determining the plurality of standardized travel stations that are associated with the travel schedules of the at least one non-air transport mode is based at least in part on an average number of passengers associated with some of the standardized travel stations, a number of travel providers at some of the standardized travel stations, a number of rail travel tracks at some of the standardized travel stations, a number of platforms at some of the standardized travel stations, or any combination thereof.

13. The method of any of claims 1 to 12, further comprising:
storing the standardized travel schedules in the standardized travel schedules database of the data processing system,
wherein determining the plurality of travel stations associated with the travel schedules comprises in the data processing system, parsing each travel schedule of the at least one non-air transport mode to determine a departure travel station and an arrival travel station for each travel leg of each travel schedule of the at least one non-air transport mode,
wherein the plurality of travel stations are determined based at least in part on the departure travel station and the arrival travel station of each travel leg of each travel schedule of the at least one non-air transport mode,
wherein determining the geographical coordinates for each of the plurality of travel stations comprises querying a travel stations database for each of the plurality of travel stations, and
wherein determining the plurality of standardized travel stations associated with the travel schedules of the at least one non-air transport mode comprises querying a standardized travel stations database based at least in part on the geographical coordinates of each of the plurality of travel stations.

14. A system comprising:
at least one processor;
a memory coupled with the at least one processor, the memory comprising:
a non-air travel schedules database that stores travel schedules of at least one non-air transport mode;
a standardized travel schedules database that stores standardized travel schedules; and
program code stored thereon and configured to be executed by the at least one processor to cause the at least one processor to perform the method of any of claims 1 to 13.

15. A computer program product comprising:
a computer readable storage medium; and
program code stored on the computer readable storage medium and configured, upon execution, to cause at least one processor to perform the method of any of claims 1 to 13.
